# EUROPÄISCHE PATENTANMELDUNG

(11) **EP 2 060 816 A2**
(43) Veröffentlichungstag der Anmeldung: **20.05.2009**
(21) Anmeldenummer: 08168325.2
(22) Anmeldetag: 05.11.2008
(51) Int. Cl.: F16D 25/12

(54) **Hydraulische Kupplungsbetätigung**

(30) Priorität: 17.11.2007 DE 102007054943; 10.01.2008 DE 102008003888; 17.10.2008 DE 102008042930
(71) Anmelder: ZF Friedrichshafen AG, 88038 Friedrichshafen (DE)
(72) Erfinder: Rottenberger, Theo, 97705 Burkardroth-Gefäll (DE); Rudolf, Thomas, 14542 Werder/OT Kemnitz (DE)

(57) **Zusammenfassung**

Hydraulische Kupplungsbetätigungseinheit für eine im Antriebsstrang eines Kraftfahrzeugs angeordnete Reibungskupplung, beinhaltend
ein Hydraulikmedium, einen Geberzylinder (1) zum Erzeugen eines hydraulischen Drucks in Abhängigkeit einer Vorgabe durch ein Kupplungspedal (3) oder einem Kupplungssignal, einem Nehmerzylinder (5) zur Erzeugung einer Ein- und Auskuppelkraft in Abhängigkeit des hydraulischen Drucks, eine Hydraulikleitung, welche Nehmerzylinder und Geberzylinder miteinander zur Übertragung des hydraulischen Drucks verbindet, wobei der Geberzylinder den Nehmerzylinder über den Volumenstrom beaufschlagt und wobei der Geberzylinder den Nehmerzylinder über das Hydraulikmedium zur Betätigung der Reibungskupplung im Einkuppel- oder Auskuppelsinne beaufschlagt, wobei im hydraulischen Übertragungsweg ein kraft-oder druckabhängig wirkendes Element (7) vorgesehen ist, das mit Erreichen einer vorbestimmten Grenze die Übersetzung zwischen Geberzylinder und Nehmerzylinder ändert.

## Beschreibung

Die Erfindung betrifft eine Reibungskupplung, insbesondere Rennsportkupplung mit einer hydraulischen Kupplungsbetätigungseinheit. Weiterhin betrifft die Erfindung eine hydraulische Kupplungsbetätigungseinheit für eine im Antriebsstrang eines Kraftfahrzeuges angeordnete Reibungskupplung, insbesondere in einem im Rennsport eingesetzten Kraftfahrzeug.

Eine solche Kupplungsbetätigungseinheit setzt sich zusammen aus einem Geberzylinder zum Erzeugen eines hydraulischen Drucks in Abhängigkeit einer Vorgabe durch ein Kupplungspedal oder einem Kupplungssignal, einem Nehmerzylinder zur Erzeugung einer Aus- oder Einkuppelkraft in Abhängigkeit des hydraulischen Drucks, einer Hydraulikleitung und einem Hydraulikmedium, wobei die Hydraulikleitung den Nehmerzylinder und Geberzylinder zur Übertragung des hydraulischen Drucks miteinander verbindet und der Geberzylinder den Nehmerzylinder vermittels dem Hydraulikmedium zur Betätigung der Reibungskupplung in einem Einkuppel- oder Auskuppelsinn beaufschlagt.

Aus der DE 198 50 323 A1 ist eine hydraulische Verstelleinrichtung für eine Kraftfahrzeugkupplung mit einem zwischen einem Nehmerzylinder und einem Geberzylinder angeordnetem Drosselglied bekannt, welche den Durchfluss des in der Hydraulikleitung eingebrachten Fluids in mindestens einer der beiden Durchflussrichtungen einen Drosselwiderstand entgegen setzen kann um zu schnelles Einrücken der Reibungskupplung entgegenzuwirken.

Nachteilig bei einer solchen Lösung ist, dass die Konstruktion nur bei übermäßig schnellem Einrücken der Kupplung, wenn beispielsweise beim Einkuppeln der Fahrer vom Pedal rutscht, eine dämpfende Wirkung hat.

Es ist Aufgabe der vorliegenden Erfindung, eine Reibungskupplung und/oder eine hydraulische Kupplungsbetätigungseinheit zur Verfügung zu stellen, die unter dafür vorhergesehenen Umständen das Einkuppelverhalten beim Start für den Fahrer vereinfacht.

Weiterhin ist es Aufgabe der Erfindung, eine Kupplungsbetätigungseinheit bereitzustellen, die ein kontrolliertes Einkuppeln bei einem Rennstart vereinfacht. Darüber hinaus ist es Aufgabe der Erfindung, eine Kupplungsbetätigungseinheit bereitzustellen, die auch bei Überlastung einer Reibungskupplung eine kontrollierte Betätigung dieser erlaubt.

Diese Aufgabe wird bei einem Gegenstand nach dem Oberbegriff des Anspruchs 1 erfindungsgemäß durch die kennzeichnenden Merkmale des Anspruchs 1 gelöst.

Eine weitere Lösung ergibt sich nach dem Kennzeichen des Anspruches 2.

Beim Einkuppelvorgang wird die Reibungskupplung aus dem ausgekuppelten Zustand in den eingekuppelten Zustand verfahren. Hierbei bewegt sich der Geberzylinder aus seiner einer Auskuppelstellung entsprechenden Position in Richtung einer einem eingekuppelten Zustand entsprechenden Position. Das Hydraulikmedium strömt in den freiwerdenden Raum im Geberzylinder zurück und der Kolben des Nehmerzylinders folgt der durch den Geberzylinder vorgegebenen Volumenänderung des Hydraulikmediums in dem Nehmerzylinder bzw. das Hydraulikventil beaufschlagt die Hydraulikleitung dahingehend, dass das Hydraulikmedium aus der Hydraulikleitung heraus strömen kann. Hierbei sinkt der Hydraulikdruck in der Hydraulikleitung und das Volumen des Hydraulikmediums entweicht in Richtung Geberzylinder bzw. Hydraulikventil.

Der im Hydraulikmedium vorherrschende Druck wird größtenteils durch die auf den Nehmerzylinder ausgeübte Kraft bestimmt. Mit dem Verfahren des Geberzylinderkolbens bzw. dem Öffnen des Hydraulikventils zum Zurückströmen des Hydraulikmediums aus der Hydraulikleitung bewegt sich auch der Nehmerzylinderkolben in Richtung einer Einkuppelposition entsprechenden Stellung.

Die Membranfeder oder Tellerfeder der Reibungskupplung folgt indirekt über den Nehmerkolben der Vorgabe des Geberzylinders bzw. den durch das Hydraulikventil geänderten Druck- und Volumenverhältnissen in der Hydraulikleitung und entspannt sich in Richtung Einkuppelstellung.

Durch den Verlauf der Kraft-Weg-Kurve der Membran- oder Tellerfeder beim Kupplungsvorgang wird hierbei der Druck im Hydraulikmedium größtenteils vorbestimmt. Dies heißt, dass der Druck im Hydraulikmedium über den Einkuppelweg veränderlich ist.

Zumindest mit Beginn des Anliegens der Anpresskraft an den Reibbelägen übt die Membranfeder auf den Nehmerkolben eine geringer werdende Abstützkraft aus. Mit Fortschreiten der Einkuppelbewegung übt die Membranfeder ihre Anpresskraft über die Anpressplatte auf die Reibbeläge aus.

Die Krafteinwirkung der Membranfeder auf den Nehmerzylinder sinkt und das Druckniveau im Hydraulikmedium ebenfalls.

Erfindungsgemäß ist die hydraulische Kupplungsbetätigungseinheit derart ausgelegt, dass diese innerhalb vorbestimmter Druckgrenzen, Volumengrenzen oder Kraftgrenzen die Übersetzung zwischen Geberzylindereinheit oder Hydraulikventil und Nehmerzylindereinheit vermittels eines druck-, volumen- oder kraftabhängigen Elements ändert.

Das Element kann erfindungsgemäß als weitere Kolben-Zylindereinheit zum Einbau in den hydraulischen Übertragungsweg ausgeführt sein. Hierbei ist vorteilhaft die weitere Kolben-Zylindereinheit mit einer vorbestimmten Kraft oder Druck gegen den hydraulischen Übertragungsweg vorgespannt. Die weitere Kolben-Zylindereinheit weist vorteilhafterweise einen begrenzten Hub für deren Vorspannkolben in diesem Zusatzzylinder auf. Hierbei kann der Vorspannkolben zwischen zwei Endlagen verfahren. Die eine Endlage nimmt der Vorspannkolben ein, wenn im hydraulischen Übertragungsweg kein Druck oder kein ausreichender Druck anliegt, der die Kraft mit der der Vorspannkolben der weiteren Kolben-Zylindereinheit gegenüber der Hydraulikleitung bzw. dem Hydraulikmedium vorgespannt ist, überwinden kann. Erst mit Erreichen des der Vorspannkraft entsprechenden Drucks im hydraulischen Übertragungsweg kann der Vorspannkolben durch die Kraft- oder Druckwirkung des Hydraulikmediums aus seiner einen bei geringem Hydraulikdruck vorliegenden Endlage in Richtung seiner weiteren, der Obergrenze des vorbestimmten Druckwirkungsbereichs entsprechenden Endlage verfahren. Dies bei einem Auskuppelvorgang ausgehend von einem in der Hydraulikleitung im wesentlichen drucklosen Zustand des Hydraulikmediums hin zu der der ausgekuppelten Position der Reibungskupplung entsprechenden Position des Nehmerzylinders bei einer Reibungskupplung mit einer die Anpresskraft erzeugenden Membran- oder Tellerfeder. Hierbei strömt Hydraulikmedium in den freiwerdenden Raum der weiteren Kolben-Zylindereinheit.

Das Hydraulikmedium wird nun von dem Geberkolben bzw. durch den vom Hydraulikventil verursachten Volumenstrom des Hydraulikmediums in Richtung der weiteren Kolben-Zylindereinheit und dem Nehmerzylinder gedrückt. Hierbei teilt sich der Volumenstrom auf beide, das Hydraulikmedium empfangende Zylinder, also dem Nehmerzylinder und die weitere Kolben-Zylindereinheit auf. Dies solange, bis der Vorspannkolben der weiteren Kolben-Zylindereinheit in seine weitere, der Obergrenze des vorbestimmten Druckwirkungsbereichs entsprechenden Endlage verfahren ist.

Innerhalb dieses Bereichs ändert sich die Übersetzung zwischen der Geberzylindereinheit bzw. der Beaufschlagung der Hydraulikleitung durch das Hydraulikventil und der Nehmerzylindereinheit der hydraulischen Kupplungsbetätigungseinheit dahingehend, dass bei gleichem Weg des Geberzylinderkolbens bzw. gleicher Beaufschlagung durch das Hydraulikventil der Kolben am Nehmerzylinder mit einem geringeren Volumen beaufschlagt wird. Mit Erreichen der weiteren, der Obergrenze des vorbestimmten Druckwirkungsbereichs entsprechenden Endlage des Kolbens der weiteren Kolben-Zylindereinheit wird die Änderung der Übersetzung zwischen Geberzylinder oder Hydraulikventil und Nehmerzylinder außer Kraft gesetzt und mit jedem weiteren Verfahren des Geberkolbens in Richtung Auskuppeln bzw. Beaufschlagung der Hydraulikleitung durch das Hydraulikventil in einem ein Auskuppeln erzeugenden Sinne wird das hierbei verdrängte Volumen bzw. zusätzlich eingebrachte Volumen an Hydraulikmedium direkt und vollständig in den Nehmerzylinder eingebracht.

Die Wirkung der Erfindung zeigt sich besonders beim Einkuppeln einer Reibungskupplung. Von der ausgekuppelten Position ausgehend befindet sich der Nehmerkolben in ausgefahrener Position und die Membran- oder Tellerfeder ist über die Ausrückmittel hierdurch in einer Auskuppelposition vorgespannt. Verfährt nun der Geberzylinderkolben in Richtung Einkuppeln, so wird das Hydraulikmedium in den Geberzylinder zurückfließen weiten bzw. schaltet das Hydraulikventil in eine Stellung, die das in die Hydraulikleitung eingebrachte Hydraulikmedium entweichen lässt, und der Nehmerzylinder verfährt in Richtung Einkuppelstellung. Die Membranfeder entspannt sich in Richtung Einkuppelstellung. Über den Kraft-Weg-Verlauf der Membranfederkurve ergibt sich der im Hydraulikmedium anliegende Druck, bzw. ergibt sich die Geschwindigkeit, mit der das Hydraulikmedium aus der Hydraulikleitung abfließt.

Ab einem bestimmten Einkuppelweg beginnt die Anpressplatte in Kontakt mit den Reibbelägen zu kommen. Die Membranfeder stützt sich nicht mehr allein über das Ausrücklager und die weiteren Ausrückmittel am Nehmerzylinderkolben ab, sondern auch über die Anpressplatte an den Reibbelägen. Die Reibbeläge kommen in Eingriff, die Drehmomentübertragung beginnt. Der Druck im Hydraulikmedium sinkt ab. Erfindungsgemäß ist das kraft-, volumen- oder druckabhängige Element derart ausgelegt, dass innerhalb des Bereichs zwischen dem Anfang der Drehmomentübertragung und dem vollständigem Einkuppeln der Bereich sich befindet, innerhalb dessen dieses Element die Übersetzung zwischen Geber- und Nehmerzylinder ändert.

Erfindungsgemäß ist vorgesehen, dass die Grenze bei Beginn der Drehmomentübertragung beim Einkuppeln überschritten wird.

Weitere erfindungsgemäße Ausgestaltungen sind den Unteransprüchen entnehmbar.

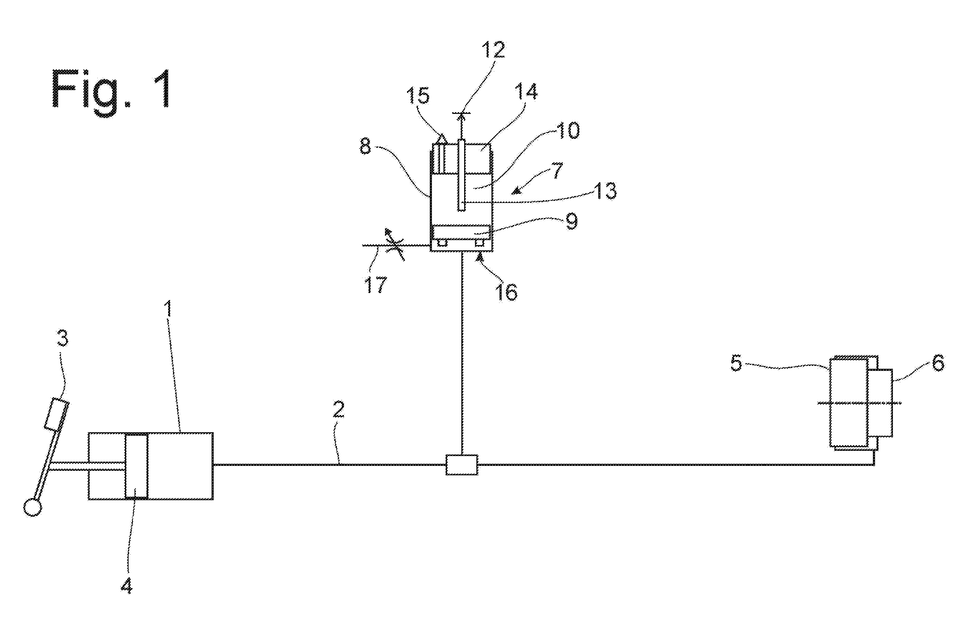

In Fig. 1 ist eine erfindungsgemäße hydraulische Kupplungsbetätigungseinheit dargestellt, bei der ein Geberzylinder 1 mit einer Hydraulikleitung 2 verbunden ist. Der Geberzylinder 1 wird über ein Kupplungspedal 3 beaufschlagt zum Ein- und Auskuppeln einer Reibungskupplung. Hierbei wird über das Kupplungspedal 3 der Geberkolben 4 im Geberzylinder 1 bewegt. Über die Hydraulikleitung 2 wird das Hydraulikmedium weitergeleitet zum Nehmerzylinder 5, der über den Nehmerkolben 6 direkt oder indirekt auf die Membran- oder Tellerfeder einer Reibungskupplung zum Aus- und Einkuppeln der Reibungskupplung wirkt. Im Allgemeinen wirkt der Nehmerkolben 6 über eine sogenannte Ausrückgabel oder auch direkt auf ein an der Membran- oder Tellerfeder angebrachtes Ausrücklager zur Betätigung der Reibungskupplung ein.

Bei üblicher Auslegung einer hydraulischen Kupplungsbetätigungseinheit beinhaltend einen Geberzylinder 1 mit Geberkolben 4, einen Nehmerzylinder 5 mit Nehmerzylinder 6, wobei Geberzylinder 1 und Nehmerzylinder 5 über eine ein Hydraulikmedium enthaltende Hydraulikleitung 2 verbunden sind, wird eine Volumenverschiebung durch den Geberkolben 4 direkt übertragen auf den Nehmerkolben 6, weicher eine diesem Volumen entsprechende Bewegung im Nehmerzylinder 5 ausführt.

Die Bewegung des Nehmerkolbens 6 wird auf die Reibungskupplung zum Kuppeln dieser übertragen. Hierbei kann ein geringer Volumenverlust zwischen Geberzylinder 1 und Nehmerzylinder 5 durch elastisches Aufweiten der hydraulischen Kupplungsbetätigungseinheit entstehen, weicher hier aber nicht berücksichtigt werden soll.

Erfindungsgemäß ist nun vorgesehen, die Übersetzung zwischen Geberzylinder 1 und Nehmerzylinder 5 mit Erreichen einer vorbestimmten Grenze, wie eine Volumengrenze oder vorteilhafterweise eine Druckgrenze, zu ändern.

Es kann erfindungsgemäß auch vorgesehen sein, dass insbesondere bei Ausführung des kraft- oder druckabhängig wirkenden Elementes als weitere Kolben-Zylindereinheit mit einem Zusatzzylinder 8 und einem Zusatzkolben 9 die Übersetzung zwischen Geber- und Nehmerzylinder mit Erreichen einer vorbestimmten Kraft oder Kraftgrenze geändert wird.

Vorteilhaft wird die Übersetzung dahingehend geändert, das beim Auskuppeln ab einem bestimmten Druck/Kraft das durch den Geberkolben 4 in Richtung Nehmerzylinder 5 beförderte Volumen des Hydraulikmediums durch ein kraft- oder druckabhängiges Element 7 zumindest teilweise mit aufgenommen wird.

Der Geberkolben 4 ist daher vorteilhaft mit dem Geberzylinder 1 auf ein entsprechend größeres Hubvolumen, beinhaltend das Auskuppelvolumen am Nehmerzylinder 5 und dem durch das druck- oder kraftabhängige Element 7 aufgenommene Volumen des Hydraulikmediums bei einem Auskuppelvorgang angepasst.

Im ausgekuppelten Zustand befindet sich daher das durch das Hubvolumen des Geberzylinders 1 beförderte Hydraulikmedium vornehmlich im Nehmerzylinder 5 und im druck- oder kraftabhängigen Element 7.

Erfindungsgemäß ist im Beispiel der Fig. 1 das druck- oder kraftabhängige Element 7 als Kolben-Zylindereinheit, aufweisend einen Zusatzzylinder 8 und einen Zusatzkolben 9, ausgebildet. Der Zylinder 8 des druck- oder kraftabhängigen Elementes 7 ist verbunden mit der Hydraulikleitung 2, so dass das Hydraulikmedium in diesen Zusatzzylinder 8 zusammen mit einem Vorspannkolben 9 mit dem Hydraulikmedium in Wirverbindung steht. Auf der dem Hydraulikmedium abgewandten Seite des Vorspannkolbens 9 ist der Zusatzzylinder 8 mit einer Vorspannkammer 10 versehen, die mit einem Gasvolumen über ein Füllventil 12 befüllt werden kann. Das Gasvolumen übt auf den Vorspannkolben 9 eine in Richtung des Hydraulikmediums gerichtete Kraft aus, die innerhalb des Hubvolumens des Vorspannkolbens 9 dieser auf das Hydraulikmedium überträgt. Hierdurch wird der Kolben, der Zusatzkolben 9 des kraft- oder druckabhängigen Elementes 7 gegenüber dem Hydraulikmedium bzw. der Hydraulikleitung 2 ,mit einer Kraft beaufschlagt. Die auf den Zusatzkolben 9 ausgeübte Kraftalso Vorspannkraft, kann durch eine Befüllung der Vorspannkammer 10 mit einem unter Überdruck stehenden Gas von außerhalb des kraft- oder duckabhängigen Elementes 7 vermittels dem Füllventil 12 eingebracht werden. Vorteilhaft ist das Füllventil 12 in einem in der Lage bezüglich dem Zusatzkolben 9 verstellbaren Anschlag 13 mit eingebracht. Der Anschlag 13 bildet so für den Kolben des druck- oder kraftabhängigen Elementes 7, also dem Zusatzkolben 9 eine zweite Endlage, die den Verfahrensweg des Zusatzkolbens 9 bei ausreichender Druckbeaufschlagung der Hydraulikleitung 2 durch den Geberkolben 4 bzw. einem Druck durch das Hydraulikventil 11 entsprechend begrenzt.

In weiterer Ausgestaltung der Erfindung ist vorgesehen, dass die auf den Zusatzkolben 9 einwirkende Vorspannkraft bzw. Kraft durch eine in die Vorspannkammer 10 des druck- oder kraftabhängigen Elementes 7 eingebrachte Vorspannfeder, wie einer Schraubendruckfeder, ein Elastomer oder einem Tellerfederpaket, erzeugt werden kann.

Durch das erfindungsgemäße Vorsehen eines die Vorspannkammer 10 begrenzenden Verschlusselementes 14, welches derart in den Zusatzzylinder 8 eingebracht ist, dass das Verschlusselement 14 gegenüber dem Zuatzzylinder 8 verlagerbar ist. Zur Veränderung des Volumens der Vorspannkammer 10 kann auch nach Einbringen eines Vorspanngases oder einer Vorspannfeder die auf den Vorspannkolben wirkende Vorspannkraft verändert werden. Hierbei ist weiterhin erfindungsgemäß vorgesehen, dass der Anschlag 13 im Verschlusselement 14 gelagert ist. Durch das im Verschlusselement 14 oder dem verstellbaren Anschlag 13 ausgebildete Füllventil 13 kann nicht nur ein Vorspanngas sondern auch eine Flüssigkeit in die Vorspannkammer 10 eingebracht werden, womit die Vorspannung nachträglich änderbar ist.

Weiterhin kann ein mit der Vorspannkammer in Wirkverbindung stehendes Füllventil 12 so gestaltet sein oder ein separat ausgebildetes Druckventil 15 vorgesehen sein, welches bei Erreichen eines vorbestimmten Systemdruckes öffnet. Ist bei dieser Ausführung dann die Vorspannkammer 10 mit einer Flüssigkeit oder Gas gefüllt, vorteilhafterweise vollständig gefüllt, so öffnet6 das Druckventil 15 ab Erreichen dieses Systemdruckes in der Hydraulikleitung 2.

Der Vorspannkolben 9 verfährt von seiner ersten Endlage am ersten Anschlag 16 bis zur Anlage an seiner zweiten Endlage am zweiten Anschlag 13. Diese Bewegung wird bei jedem Auskuppelvorgang unabhängig von der Art der Ausführung der Vorspannung bzw. in der Vorspannkammer 10 ausgeführt.

Durch das Vorsehen eines Druckventils 15 oder Ausgestaltung des Füllventils 12 dahingehend, dass dieses bei einem vorbestimmten Systemdruck öffnet, kann eine über den Verfahrweg des Vorspannkolbens 9 zwischen der ersten Endlage am ersten Anschlag 16 und der zweiten Endlage am zweiten Anschlag 13 konstante Vorspannkraft einwirkend auf das Hydraulikmedium bei einem Auskuppelvorgang erzielt werden.

So kann erzielt werden, dass während einer ersten Auskuppelbewegung die auf den Vorspannkolben wirkende Vorspannkraft größer ist und nach dem Entweichen des in der Vorspannkammer 10 zusätzlich zu einer Vorspannfeder eingebrachten Gases oder Flüssigkeit dann die Vorspannkraft geringer ausfällt.

Der Vorspannkolben 9 kann erfindungsgemäß zwischen zwei Endlagen verfahren.

Die eine erste Endlage am ersten Anschlag 16 nimmt der Vorspannkolben ein, wenn im hydraulischen Übertragungsweg kein Druck oder kein ausreichender Druck anliegt, der die Kraft, mit der der Vorspannkolben der weiteren Kolben-Zylindereinheit vorgespannt ist, überwinden kann. Erst mit Erreichen des der Vorspannkraft entsprechenden Drucks im hydraulischen Übertragungsweg kann der Vorspannkolben durch die Kraft- oder Druckwirkung des Hydraulikmediums aus seiner ersten, bei geringem Hydraulikdruck vorliegenden Endlage in Richtung seiner zweiten, der Obergrenze des vorbestimmten Druckwirkungsbereichs entsprechenden Endlage am zweiten Anschlag 13 verfahren. Hierbei strömt Hydraulikmedium in den freiwerdenden Raum der als Zusatzelement 7 ausgebildeten weiteren Kolben-Zylindereinheit, also dem Zusatzzylinder 8.

Das Hydraulikmedium wird nun von dem Geberkolben 1 in Richtung der weiteren Kolben-Zylindereinheit in den Zusatzzylinder 8 und in den Nehmerzylinder 5 gedrückt.

Hierbei teilt sich der Volumenstrom auf beide das Hydraulikmedium empfangende Zylinder 5,8 auf. Dies solange, bis der Vorspannkolben 9 des Zusatzelementes 7 der weiteren Kolben-Zylindereinheit in seine weitere, der Obergrenze des vorbestimmten Druckwirkungsbereichs entsprechenden zweiten Endlage verfahren ist.

Innerhalb dieses Bereichs ändert sich die Übersetzung zwischen Geberzylindereinheit 1,4 und Nehmerzylindereinheit 5,6 der hydraulischen Kupplungsbetätigungseinheit dahingehend, dass bei gleichem Weg des Geberzylinderkolbens 4 der Nehmerkolben 6 am Nehmerzylinder 5 mit einem geringeren Volumen beaufschlagt wird. Mit Erreichen der weiteren, zweiten, der Obergrenze des vorbestimmten Druckwirkungsbereichs entsprechenden Endlage des Vorspannkolbens 9 den weiteren Zusatzelementen 7 wird die Änderung der Übersetzung zwischen Geberzylinder 1 und Nehmerzylinder 7 wird die Änderung der Übersetzung zwischen Geberzylinder 1 und Nehmerzylinder 5 außer Kraft gesetzt und mit jedem weiteren Verfahren des Geberkolbens 4 in Richtung Auskuppeln wird das hierbei verdrängte Volumen direkt und vollständig in den Nehmerzylinder 5 eingebracht.

Die Wirkung der Erfindung zeigt sich besonders bei Einkuppeln einer Reibungskupplung. Von der ausgekuppelten Position ausgehend befindet sich der Nehmerkolben 6 im ausgefahrener Position und die Membran- oder Tellerfeder ist über die Ausrückmittel hierdurch in Auskuppelposition vorgespannt. Verfährt nun der Geberkolben 4 in Richtung Einkuppeln, so wird das Hydraulikmedium in den Geberzylinder 1 zurück fließen wollen. Die Membranfeder entspannt sich in Richtung Einkuppelstellung. Über den Kraft-Weg-Verlauf der Membranfederkurve ergibt sich der im Hydraulikmedium hierbei anliegende Druck.

Ab einem bestimmten Einkuppelweg beginnt die Anpressplatte in Kontakt mit den Reibbelägen zu kommen. Die Membranfeder stützt sich nicht mehr allein über das Ausrücklager und die weiteren Ausrückmittel am Nehmerkolben 6 ab, sondern auch über die Anpressplatte an den Reibbelägen. Die Reibbeläge kommen in Eingriff, die Drehmomentübertragung beginnt. Der Druck im Hydraulikmedium der Hydraulikleitung 2 sinkt ab.

Erfindungsgemäß ist das kraft- oder druckabhängige Element 7 derart ausgelegt, dass innerhalb des Bereichs zwischen Anfang der Drehmomentübertragung und vollständigem Einkuppeln der Bereich sich befindet, innerhalb dessen dieses Zusatzelement 7 die Übersetzung zwischen Geber- und Nehmerzylinder 1,5 ändert.

Erfindungsgemäß ist vorgesehen, dass die Grenze bei Beginn der Drehmomentübertragung beim Einkuppeln überschritten wird.

In weiterer erfindungsgemäßer Ausgestaltung ist vorgesehen, dass das Zusatzelement 7 während des Einkuppelvorganges mit Beginn der Drehmomentübertragung der Reibungskupplung beginnt das aufgenommene Hydraulikmedium in die Hydraulikleitung 2 wieder abzugeben.

Für entsprechende Anwendungsfälle kann erfindungsgemäß auch vorgesehen sein, dass das druck- oder kraftabhängige Element 7 bei einem Einkuppelvorgang zwischen Beginn der Drehmomentübertragung und vollständigem Einkuppeln der Reibungskupplung beginnt, das aufgenommene Hydraulikmedium in die Hydraulikleitung 2 abzugeben.

Mit dem Zeitpunkt, in dem bei einem Einkuppelvorgang das Hydraulikmedium aus dem zumindest teilweise vorgespannten Zusatzelement 7 zurück in die Hydraulikleitung 2 fließt, wird in den Geberzylinder 1 sowohl das Hydraulikvolumen aus dem Nehmerzylinder 5 als auch aus dem Zusatzzylinder 8 zurückfließen. Der Geberkolben 4 weist dadurch einen längeren Hub auf. Die Wirkung des Zusatzelements 7 hat am Geberkolben 4 zur Folge, dass innerhalb der Grenzen, in denen das druck- oder kraftabhängige Element 7 beim Einkuppeln Hydraulikmedium zurück in die Hydraulikleitung 2 fördert, der zurückgelegte Weg am Geberkolben 4 und damit am Kupplungspedal größer wird als außerhalb dieser Grenzen. Somit muss der Fahrer am Kupplungspedal einen größeren Weg zurücklegen.

Die Strecke am Kupplungspedal und am Geberzylinder 4, innerhalb die nun die Einkuppelbewegung beendet wird, verlängert sich. Somit erhält der Fahrer innerhalb der Grenzen, in denen das Zusatzelement 7 zumindest teilweise das Hydraulikmedium aufnimmt oder abgibt, einen größeren Verfahrweg am Geberkolben 4. Die Modulation der Reibungskupplung ist über einen größeren Wegbereich gestreckt und einfacher auszuführen. Insbesondere bei Reibungskupplungen mit sehr kurzen Wegen am Kupplungspedal oder/und Reibungskupplungen mit sehr steilen Kraft-Weg-Kurven, der die Anpresskraft der Reibungskupplung erzeugenden Membranfeder kann eine einfache Bedienbarkeit der Reibungskupplung im Bereich des Greifens der Reibbeläge erzielt werden. Die Modulation zwischen Beginn der Drehmomentübertragung beim Einkuppeln bis zum vollständig eingekuppelten Zustand ist gut durchführbar, wobei der Kuppelbereich, in dem die Reibbeläge nicht in Kontakt mit den Reibpartner stehen, schnell vorteilhaft durchfahren werden kann.

Der Aufbau des Zusatzelementes 7 kann auch dahingehend erfolgen, dass die Vorspannkammer 10 zum Vorspannen des Vorspannkolbens 9 gegen das Hydraulikmedium oder seiner ersten Endlage, die bei niedrigem Druck im Hydraulikmedium angefahren wird, über ein an der Vorspannkammer 10 angebrachtes Füllventil 12 einstellbar ist.

Alternativ kann auch vorgesehen sein, dass die Vorspannkammer 10 eine Vorspannfeder aufweist, welche die Wirkung wie das unter Druck stehende Gas der Vorspannkammer 10 auf den Vorspannkolben übernimmt. Hier kann die Vorspannkraft durch einen Austausch verschiedener Vorspannfedern oder einem unterschiedlichen Vorspannen der Vorspannfedern der jeweiligen Einsatzbedingungen angepasst werden.

In weiterer Ausgestaltung der Erfindung ist vorgesehen, dass am Zusatzelement 7 eine hinsichtlich der Hydraulikleitung 2 wirksame Entlüftungsvorrichtung 17 vorgesehen ist. Diese kann erfindungsgemäß, wie in Fig. 1 gezeigt, am Zusatzzylinder 8 oder an der Verbindung des Zusatzzylinders 8 mit der Hydraulikleitung 2 angebracht sein.

Somit kann vorteilhaft die Hydraulikleitung frei von unerwünschten Gaseinschlüssen gehalten werden.

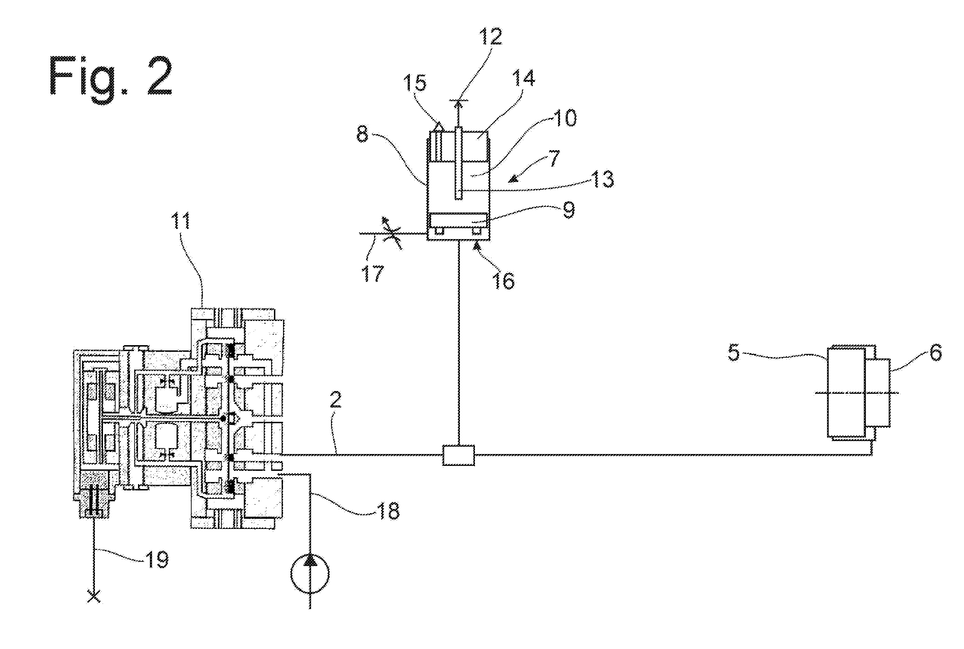

Bei der in Fig. 2 gezeigten alternativen Ausführungsform einer hydraulischen Kupplungsbetätigungseinheit zum Ein- oder Auskuppeln einer im Antriebstrang eines Kraftfahrzeuges angeordneten Reibungskupplung wurde abweichend von der Ausführung nach Fig. 1 der Geberzylinder 1 mit seinem Geberkolben 4 ausgetauscht durch ein als Servoventil ausgeführtes Hydraulikventil 11. Das Hydraulikventil 11 ist an die Hydraulikleitung 2 zur Beaufschlagung des Nehmerzylinders 5 zum Aus- oder Einkuppeln angeschlossen. Über eine an dem Hydraulikventil 11 angebrachte Signalleitung wird dieses entsprechend gesteuert dahingehend, dass ein durch ein Kupplungspedal bzw. durch eine Motorsteuerung erzeugtes Signal das Hydraulikventil 11 mit der Druckversorgung 18 verbindet. In den erfindungsgemäßen Details unterscheidet sich die Ausführung nach Fig. 2 nicht von den in Fig. 1 gezeigten und erläuterten Merkmalen. Entsprechend einer über die Signalleitung 19 vorgegebenen Einkuppelposition öffnet bzw. schließt das als Servoventil ausgestaltete Hydraulikventil 11 nach Durchfluss einer vorbestimmten Menge an Hydraulikmedium entsprechend der durchgeflossenen Menge.

### Bezugszeichenliste

- 1: Geberzylinder
- 2: Hydraulikleitung
- 3: Kupplungspedal
- 4: Geberkolben
- 5: Nehmerzylinder
- 6: Nehmerkolben
- 7: Zusatzelement
- 8: Zusatzzylinder
- 9: Zusatzkolben
- 10: Vorspannkammer
- 11: Hydraulikventil
- 12: Füllventil
- 13: Zweiter Anschlag
- 14: Verschlusselement
- 15: Druckventil
- 16: Erster Anschlag
- 17: Entlüftungsvorrichtung
- 18: Druckversorgung
- 19: Signalleitung

## Patentansprüche

1. Hydraulische Kupplungsbetätigungseinheit zum Ein- oder Auskuppeln einer im Antriebsstrang eines Kraftfahrzeugs angeordneten Reibungskupplung, beinhaltend
- einen Geberzylinder oder ein Hydraulikventil zum Erzeugen eines hydraulischen Drucks in Abhängigkeit einer Vorgabe durch ein Kupplungspedal oder einem Kupplungssignal
- einen Nehmerzylinder zur Erzeugung einer Ein- und Auskuppelkraft in Abhängigkeit des hydraulischen Drucks
- eine mit einem Hydraulikmedium befüllte Hydraulikleitung, welche den Geberzylinder oder das Hydraulikventil mit dem Nehmerzylinder zur Übertragung des hydraulischen Drucks verbindet, wobei der Geberzylinder oder das Hydraulikventil den Nehmerzylinder über den Volumenstrom des Hydraulikmediums beaufschlagt zur Betätigung der Reibungskupplung im Einkuppel- oder Auskuppelsinne,
**dadurch gekennzeichnet,**
**dass** im hydraulischen Übertragungsweg ein kraft- oder druckabhängig wirkendes Element vorgesehen ist, das mit Erreichen einer vorbestimmten Kraft-, Druck- oder Volumengrenze die Übersetzung zwischen Geberzylinder oder Hydraulikventil und Nehmerzylinder ändert.

2. Kraft- oder druckabhängig wirkendes Element zur Verwendung in einer hydraulischen Kupplungsbetätigungseinheit zum Ein- oder Auskuppeln einer im Antriebsstrang eines Kraftfahrzeuges angeordneten Reibungskupplung, wobei die Reibungskupplung beinhaltet:
- einen Geberzylinder oder ein Hydraulikventil zum Erzeugen eines hydraulischen Drucks in Abhängigkeit einer Vorgabe durch ein Kupplungspedal oder einem Kupplungssignal,
- einen Nehmerzylinder zur Erzeugung einer Ein- und Auskuppelkraft in Abhängigkeit des hydraulischen Drucks,
- eine mit einem Hydraulikmedium befüllte Hydraulikleitung, welche den Geberzylinder oder das Hydraulikventil mit dem Nehmerzylinder zur Übertragung des hydraulischen Drucks verbindet, wobei der Geberzylinder oder das Hydraulikventil den Nehmerzylinder über den Volumenstrom des Hydraulikmediums beaufschlagt zur Betätigung der Reibungskupplung im Einkuppel- oder Auskuppelsinne,
- wobei das kraft- oder druckabhängig wirkende Element mit Erreichen einer vorbestimmten Kraft-, Druck- oder Volumengrenze die Übersetzung zwischen Geberzylinder oder Hydraulikventil und Nehmerzylinder ändert.

3. Hydraulische Kupplungsbetätigungseinheit nach einem der vorhergehenden Ansprüche,
**dadurch gekennzeichnet,**
**dass** das kraft- oder druckabhängige Element zwischen Geberzylinder oder Hydraulikventil und Nehmerzylinder angeordnet ist.

4. Hydraulische Kupplungsbetätigungseinheit nach einem der Ansprüche 1 bis 3,
**dadurch gekennzeichnet,**
**dass** das kraft- oder druckabhängig wirkende Element in der Hydraulikleitung angeordnet ist.

5. Hydraulische Kupplungsbetätigungseinheit nach einem der Ansprüche 1 bis 3,
**dadurch gekennzeichnet,**
**dass** das Kraft- oder druckabhängig wirkende Element am Geberzylinder oder am Hydraulikventil angeordnet ist.

6. Hydraulische Kupplungsbetätigungseinheit nach einem der Ansprüche 1 bis 3,
**dadurch gekennzeichnet,**
**dass** das Kraft- oder druckabhängig wirkende Element am Nehmerzylinder angeordnet ist.

7. Hydraulische Kupplungsbetätigungseinheit nach Anspruch 6,
**dadurch gekennzeichnet,**
**dass** das kraft- oder druckabhängig wirkende Element an der Entlüftungsvorrichtung des Nehmerzylinders angeordnet ist.

8. Hydraulische Kupplungsbetätigungseinheit nach einem der vorhergehenden Ansprüche,
**dadurch gekennzeichnet,**
**dass** das kraft- oder druckabhängige Element mit Erreichen einer weiteren kraft-, volumen- oder druckabhängigen Grenze die Änderung der Übersetzung zwischen Geber- und Nehmerzylinder wieder aufhebt.

9. Hydraulische Kupplungsbetätigungseinheit nach einem der vorhergehenden Ansprüche,
**dadurch gekennzeichnet,**
**dass** die Änderung der Übersetzung zwischen Geber- und Nehmerzylinder nach Durchfluss eines vorbestimmten Volumens oder nach einer vorbestimmten Wegstrecke wieder aufgehoben wird.

10. Hydraulische Kupplungsbetätigungseinheit nach einem der vorhergehenden Ansprüche,
**dadurch gekennzeichnet,**
**dass** die Übersetzung dahingehend geändert wird, dass der Verfahrweg am Nehmerzylinder kleiner ausfällt.

11. Hydraulische Kupplungsbetätigungseinheit nach einem der vorhergehenden Ansprüche,
**dadurch gekennzeichnet,**
**dass** die Übersetzung dahingehend geändert wird, dass der Verfahrweg am Nehmerzylinder im Bereich der Änderung der Übersetzung zumindest abschnittsweise annähernd konstant bleibt.

12. Hydraulische Kupplungsbetätigungseinheit nach einem der Ansprüche 1 bis 3,
**dadurch gekennzeichnet,**
**dass** das kraft- oder druckabhängige Element zwischen Geberzylinderkolben und Nehmerzylinderkolben angeordnet ist.

13. Hydraulische Kupplungsbetätigungseinheit nach einem der vorhergehenden Ansprüche,
**dadurch gekennzeichnet,**
**dass** das kraft- oder druckabhängige Element einen mit dem Hydraulikmedium in Wirkverbindung stehenden Zylinder und Kolben aufweist.

14. Hydraulische Kupplungsbetätigungseinheit nach Anspruch 13,
**dadurch gekennzeichnet,**
**dass** der Kolben im Zylinder einen begrenzten Hub aufweist.

15. Hydraulische Kupplungsbetätigungseinheit nach Anspruch 13 oder 14,
**dadurch gekennzeichnet,**
**dass** der Kolben gegenüber dem Hydraulikmedium beziehungsweise der Hydraulikleitung mit einer Kraft beaufschlagt ist.

16. Hydraulische Kupplungsbetätigungseinheit nach Anspruch 15,
**dadurch gekennzeichnet,**
**dass** die Kraft über den Hub des Kolbens veränderlich ist.

17. Hydraulische Kupplungsbetätigungseinheit nach Anspruch 15 oder 16,
**dadurch gekennzeichnet,**
**dass** die Kraft in Art einer Vorspannkraft auf den Kolben ausgeübt wird.

18. Hydraulische Kupplungsbetätigungseinheit einem der Ansprüche 15 bis 17,
**dadurch gekennzeichnet,**
**dass** die auf den Kolben ausgeübte Kraft einstellbar ist, insbesondere von außerhalb des kraft- oder druckabhängige Elementes.

19. Hydraulische Kupplungsbetätigungseinheit nach einem der vorhergehenden Ansprüche 13 bis 18,
**dadurch gekennzeichnet,**
**dass** der Kolben im Zylinder in eine erste Endlage und eine zweite Endlage verfahren kann.

20. Hydraulische Kupplungsbetätigungseinheit nach Anspruch 19,
**dadurch gekennzeichnet,**
**dass** die erste Endlage und / oder die zweite Endlage einstellbar ist, so dass der Verfahrweg des Kolbens zwischen den Endlagen veränderlich ist.

21. Hydraulische Kupplungsbetätigungseinheit nach Anspruch 19 oder 20,
**dadurch gekennzeichnet,**
**dass** mit Erreichen eines vorbestimmten Druckniveaus in der Hydraulikleitung der Kolben aus seiner ersten Endlage sich heraus bewegt in Richtung auf die zweite Endlage zu.

22. Hydraulische Kupplungsbetätigungseinheit nach einem der Ansprüche 19 bis 21,
**dadurch gekennzeichnet,**
**dass** der Kolben bei einer Bewegung zwischen den zwei Endlagen das Volumen der Hydraulikleitung verändert.

23. Hydraulische Kupplungsbetätigungseinheit nach einem der vorhergehenden Ansprüche,
**dadurch gekennzeichnet,**
**dass** das kraft- oder druckabhängig wirkenden Element eine für die Hydraulikleitung wirksame Entlüftungsvorrichtung aufweist.
